(19) Europäisches Patentamt / European Patent Office / Office européen des brevets

(11) **EP 1 733 502 B1**

(12) **FASCICULE DE BREVET EUROPEEN**

(45) Date de publication et mention
de la délivrance du brevet:
**30.09.2009   Bulletin 2009/40**

(21) Numéro de dépôt: **04724037.9**

(22) Date de dépôt: **29.03.2004**

(51) Int Cl.:
*H04L 9/06* (2006.01)

(86) Numéro de dépôt international:
**PCT/FR2004/050133**

(87) Numéro de publication internationale:
**WO 2005/107138 (10.11.2005 Gazette 2005/45)**

(54) **PROCESSEUR D'EXECUTION D'UN ALGORITHME DE TYPE AES**

PROZESSOR ZUM AUSFÜHREN EINES AES ALGORITHMUS

PROCESSOR FOR EXECUTING AN AES-TYPE ALGORITHM

(84) Etats contractants désignés:
**DE FR GB IT**

(43) Date de publication de la demande:
**20.12.2006   Bulletin 2006/51**

(73) Titulaires:
• **STMICROELECTRONICS SA**
**92120 Montrouge (FR)**
• **STMicroelectronics S.r.l.**
**20041 Agrate Brianza (Milano) (IT)**

(72) Inventeurs:
• **TEGLIA, Yannick**
**F-13011 MARSEILLE (FR)**
• **ROMAIN, Fabrice**
**F-83560 RIANS (FR)**
• **LIARDET, Pierre-Yvan**
**F-13790 PEYNIER (FR)**
• **FRAGNETO, Pasqualina**
**I-82038 VITULANO (IT)**

• **SOZZANI, Fabio**
**I-20090 VIMOBRONE (IT)**
• **BERTONI, Guido**
**I-20095 CUSANO (IT)**

(74) Mandataire: **de Beaumont, Michel**
**Cabinet Michel de Beaumont**
**1, rue Champollion**
**38000 Grenoble (FR)**

(56) Documents cités:
**US-A1- 2003 068 036        US-A1- 2003 099 352**
**US-A1- 2003 133 568**

• **STALLINGS W: "THE ADVANCED ENCRYPTION STANDARD" CRYPTOLOGIA, UNITED STATES MILITARY ACADEMY, WEST POINT, NY, US, vol. 26, no. 3, juillet 2001 (2001-07), pages 165-188, XP001094868 ISSN: 0161-1194**

**Description**

La présente invention concerne le domaine du chiffrement de données numériques au moyen d'algorithmes destinés à masquer les données d'origine afin de les rendre indétectables par un pirate éventuel. L'invention concerne plus particulièrement un algorithme connu sous la dénomination Rijndael mettant en oeuvre une même transformation sur différentes parties de données à chiffrer, et parmi ceux-ci l'algorithme AES (Advanced Encryption Standard, FIPS PUB 197) où la taille des blocs de données est fixée à 128 bits.

Un tel algorithme est généralement exécuté par des circuits intégrés, soit au moyen de machines d'états en logique câblée, soit au moyen de microprocesseurs exécutant un programme en mémoire (généralement une mémoire morte). Cet algorithme utilise des clés secrètes propres aux circuits intégrés ou à l'utilisateur, qui sont exploitées par l'algorithme pour chiffrer les données. Plus précisément, l'algorithme AES applique, à un mot ou code de données découpées en blocs, une même transformation plusieurs fois de suite à partir de sous-clés de chiffrement différentes (plus précisément de parties d'un mot binaire constituant une clé). Un exemple d'application de la présente invention est l'utilisation d'un tel algorithme dans des éléments électroniques de type cartes à puce.

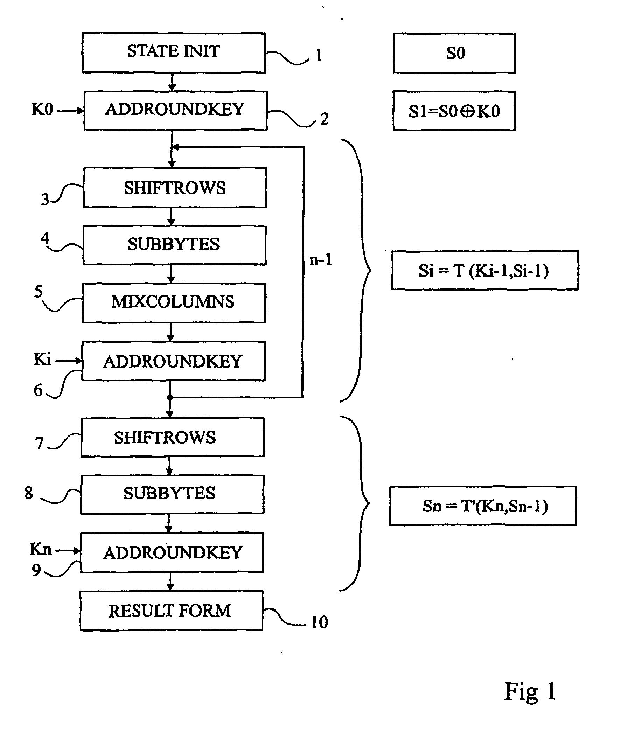

La figure 1 illustre, par un organigramme simplifié, les étapes principales d'un algorithme de type AES. On se contentera de décrire le chiffrement, le déchiffrement reprenant les transformations inverses. Pour plus de détails, on pourra se référer à l'ouvrage "The Design of Rijndael" de Joan Daemen et Vincent Rijmen, paru aux éditions Springer-Verlag (ISBN 3-540-42580-2) et à la norme AES (FIPS PUB 197).

Cet algorithme chiffre un mot ou code $S_0$ d'un nombre de bit prédéterminé (128 bits pour l'AES) en un autre mot ou code $S_n$ de même taille. Les données à traiter sont en fait constituées de plusieurs mots ou codes résultants d'un découpage préalable des données en mots ayant tous la même taille. Le chiffrement et le déchiffrement reposent sur une clé secrète dont la longueur (128, 192 ou 256 bits pour l'AES) conditionne la sécurité du chiffrement.

En pratique, chaque étape d'un algorithme de type AES traite une matrice de quatre lignes et quatre colonnes, représentant un mot, et dont chaque élément est un octet ou bloc du code de 128 bits traité. Pour simplifier la description qui va suivre, on fera référence, pour chaque étape, à un état considéré comme étant une matrice.

L'invention sera décrite en relation avec un algorithme de type AES appliqué à des mots de 32 bits découpés en octets, ce qui correspond au cas le plus fréquent.

Pour la mise en oeuvre de l'algorithme de chiffrement ou de déchiffrement, on commence par produire, à partir de la clé secrète sur 128, 192 ou 256 bits, respectivement 11, 13 ou 15 sous-clés comprenant chacune également 128 bits. Ces sous-clés sont destinées à être utilisées par l'algorithme comme cela sera décrit en relation avec la figure 1.

On part d'un état initial (bloc 1, STATE INIT) S du code ou mot de données à chiffrer.

Une première phase du procédé de chiffrement est une opération (bloc 2, ADDROUNDKEY) qui consiste à effectuer une combinaison de type Ou Exclusif (XOR) de l'état initial S avec la première sous-clé $K_0$. On obtient un premier état intermédiaire $S_0$.

Une deuxième phase du procédé de chiffrement consiste à effectuer plusieurs tours ou cycles d'une même transformation T faisant intervenir, à chaque tour, l'état $S_{i-1}$ obtenu au tour précédent et une sous-clé courante $K_i$. Le nombre de tours de transformation T correspond à n-1, c'est-à-dire au nombre n+1 de sous-clés dérivées, diminué de 2.

Chaque transformation de tour T est constituée de quatre opérations appliquées successivement.

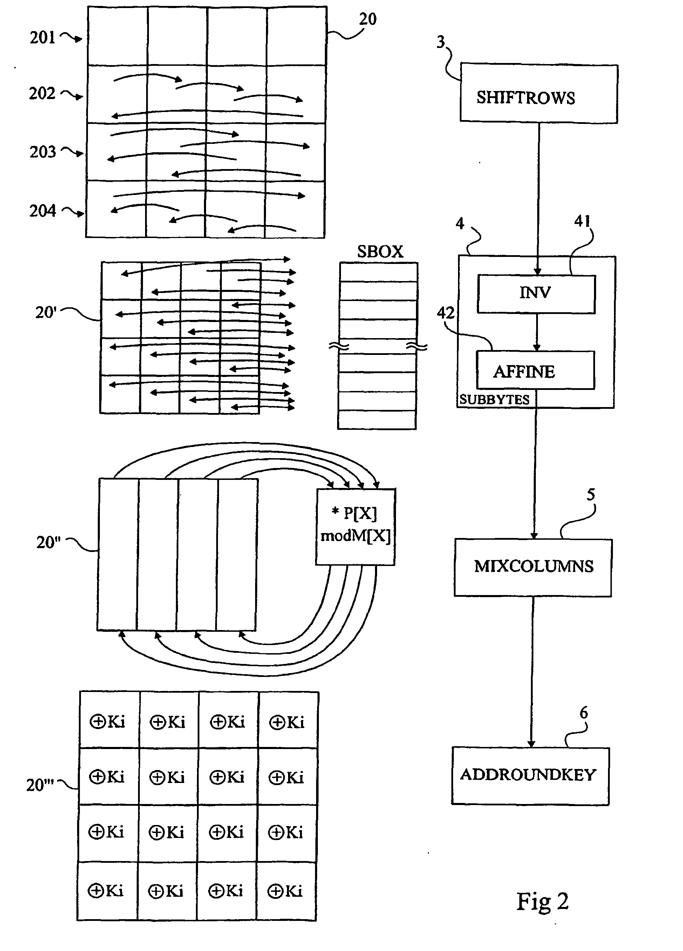

La figure 2 illustre plus en détail ces quatre opérations sur une matrice 20 de quatre lignes et quatre colonnes d'octets à laquelle s'applique un algorithme de type AES.

Une première opération (bloc 3, SHIFTROWS) consiste à opérer une rotation sur les trois dernières lignes de la matrice 20. La première ligne 201 de la matrice 20 demeure inchangée. La deuxième ligne 202 subit une rotation d'un octet. La troisième ligne 203 subit une rotation de deux octets. La quatrième ligne 204 subit une rotation de trois octets.

Une deuxième opération (bloc 4, SUBBYTES) de la transformation de tour T constitue une transformation non linéaire dans laquelle chaque octet de la matrice 20' constituant l'état courant est remplacé par son image, généralement prise dans une table de substitution (SBOX) précalculée. Comme l'illustre la figure 2, la table de substitution SBOX peut être obtenue par deux transformations combinées. Une première transformation (bloc 41, INV) consiste à inverser l'octet considéré (l'élément de la matrice 20') dans le corps fini d'ordre $2^8$ (pour correspondre à l'octet), l'octet 00 constituant sa propre image. Cette inversion est suivie d'une transformation affine (bloc 42, AFFINE).

Les première et deuxième opérations peuvent être interverties.

Une troisième opération (bloc 5, MIXCOLUMNS) de la transformation de tour T consiste à considérer chaque colonne de la matrice 20" issue de l'étape précédente comme un polynôme sur le corps fini d'ordre $2^8$, et à multiplier chacun de ces polynômes par un polynôme de combinaison P[X] modulo un polynôme M[X].

Une quatrième et dernière opération (bloc 6, ADDROUNDKEY) de la transformation de tour T de rang i consiste à appliquer la sous-clé $K_i$ à la matrice résultante 20" de l'état précédent pour obtenir une matrice 20'" dans laquelle chaque octet de la matrice 20" a été combiné par un Ou-Exclusif, bit à bit, avec un octet $K_i$ (j,l) - j compris entre 0 et 3 (rang de la ligne dans la matrice) et 1 compris entre 0 et 3 (rang de la colonne dans la matrice) - de la sous clé $K_i$. Cette opération 6 est la même que l'opération 2 de la première phase du chiffrement, mais effectuée avec une sous-clé différente.

A l'issue de l'opération 6, on obtient pour un tour de rang i, un état $S_i = T(K_i, S_{i-1})$. Les quatre opérations de la transformation de tour sont répétées n-1 fois, c'est-à-dire qu'après l'opération 6, on revient à l'opération 3 pour réeffectuer un tour avec une sous-clé suivante.

La troisième phase de l'algorithme de chiffrement AES (figure 1) consiste en un dernier tour légèrement modifié par rapport à celui illustré par la figure 2. En fait, on reproduit des opérations de la transformation de tour à l'exception de la troisième (MIXCOLUMNS) . En figure 1, on a illustré ce dernier tour par des blocs 7, 8 et 9 reprenant les opérations des blocs 3, 4, et 6 décrites précédemment avec, comme clé pour l'opération 9, la dernière sous-clé $K_n$.

On obtient alors l'état $S_n = T'(K_n, S_{n-1})$. Ce résultat est le cas échéant mis en forme (bloc 10, RESULT FORM) pour utilisation ultérieure.

La partie critique en terme de stockage d'un algorithme de type AES est dans l'exécution de l'étape SUBBYTE (blocs 4 et 8) faisant appel à une table de substitution. Cette table représente généralement une matrice de 256 octets qu'il est nécessaire de précalculer, puis d'aller lire dans une mémoire de stockage 16 fois à chaque tour de l'algorithme AES.

Une autre solution possible consiste à mémoriser une table avec les résultats de la table de substitution SBOX et de la transformation de colonne (MIXCOLUMNS) . La table mémorisée et les résultats des deux transformations étant appliqués à un octet de chaque état. Un inconvénient est que la taille de cette table est alors égale à $2^{10}$ octets.

Un autre problème des traitements algorithmiques de type AES connus est lié à leur sensibilité à des attaques par analyse de la consommation en courant du circuit exécutant l'algorithme. Une telle attaque connue sous la dénomination DPA (Differential Power Analysis) consiste à corréler la consommation du circuit intégré exécutant l'algorithme avec des résultats de calcul faisant intervenir les clés secrètes utilisées lors du chiffrement ou du déchiffrement. En pratique, à partir d'un message à chiffrer et d'hypothèses sur la clé secrète, on établit une courbe de corrélation statistique en fonction du temps entre la consommation du produit pour le chiffrement du message et une valeur intermédiaire calculée par le circuit. De telles attaques en consommation sont décrites dans la littérature (voir par exemple l'article "Differential Power Analysis" de Paul Kocher, Joshua Jaffe et Benjamin Jun, paru en 1999, conférence CRYPTO 99, pages 388 à 397, publié par Springer-Verlag LNCS 1666).

Des exemples de circuits mettant en oeuvre ou utilisant l'algorithme AES pour chiffrer/déchiffrer des données sont décrits dans les documents US-A-2003/0133568, US-A-2003/0068036, et US-A-2003/0099352.

Selon un premier aspect, la présente invention vise à proposer une nouvelle architecture de circuit d'exécution d'un algorithme de type AES, ou plus généralement de type Rijndael, qui soit moins encombrante que les architectures classiques.

L'invention vise également à proposer une architecture permettant l'exécution de tous les tours de l'algorithme au moyen d'un même groupe d'opérateurs matériels.

L'invention vise également à minimiser la taille mémoire nécessaire pour le stockage des tables.

L'invention vise également à proposer une solution qui soit compatible avec l'exécution de l'algorithme de type AES par une machine d'états en logique câblée en circuit intégré.

Selon un deuxième aspect, l'invention prévoit l'introduction d'au moins une valeur aléatoire dans l'exécution de l'algorithme de type AES pour le rendre résistant aux attaques de type par analyse statistique de la consommation.

Pour atteindre ces objets et d'autres, la présente invention prévoit un processeur d'exécution d'un algorithme de type Rijndael, effectuant plusieurs tours de chiffrement ou déchiffrement d'une matrice initiale composée de blocs de données de taille identique pour obtenir une matrice résultante de même taille, chaque tour impliquant une matrice de blocs de clés de chiffrement ou déchiffrement de même taille que les blocs de données, et une table de substitution des blocs de données, comportant :

un premier registre d'entrée pour contenir une colonne de blocs de données d'entrée de tour ;
un registre de sortie pour contenir une colonne de blocs de données transformées de sortie de tour ou une colonne de blocs de données intermédiaires ;
un deuxième registre d'entrée pour contenir soit une colonne de blocs de clés, soit les blocs de données intermédiaires du registre de sortie ;
un élément de substitution de blocs d'après une table de substitution chargée dans une mémoire, ledit élément de substitution recevant les données bloc par bloc après sélection dans le premier registre et fournissant, pour chaque bloc, une colonne de blocs ;
un élément commandable de permutation circulaire des blocs de la colonne du circuit de substitution ; et
un élément de combinaison bit à bit de type OU-Exclusif de la colonne de blocs fournie par le circuit de permutation avec le contenu du deuxième registre, le résultat de la combinaison étant chargé dans le registre de sortie.

Selon un mode de réalisation de la présente invention, le deuxième registre reçoit une colonne de blocs de clés à chaque chargement d'une nouvelle colonne de blocs de données dans le premier registre, et une colonne de blocs de données intermédiaires sinon.

Selon un mode de réalisation de la présente invention, les opérations effectuées par lesdits éléments sont effectuées, à chaque tour, autant de fois qu'il y a de blocs dans la matrice d'états.

Selon un mode de réalisation de la présente invention, ledit élément de substitution comprend :

un premier élément de substitution bloc à bloc d'après ladite table ;
un deuxième élément d'expansion d'un bloc fourni par ledit premier élément en une colonne de blocs ; et
une série d'éléments multiplicateurs, bloc par bloc, de la colonne fournie par ledit deuxième élément.

Selon un mode de réalisation de la présente invention, ladite série d'éléments multiplicateurs et ledit élément de permutation circulaire sont désactivés au dernier tour de chiffrement ou de déchiffrement.

Selon un mode de réalisation de la présente invention, le processeur comprend en outre des moyens pour masquer l'exécution des transformations de tour par au moins une quantité aléatoire.

Selon un mode de réalisation de la présente invention, le processeur comprend des éléments de masquage pour combiner par une fonction de type OU-Exclusif le bloc appliqué à l'élément de substitution par au moins un premier nombre ayant la taille dudit bloc.

Selon un mode de réalisation de la présente invention, ledit élément de substitution utilise une table calculée avec un deuxième nombre aléatoire de même longueur que le premier nombre, ladite table respectant le fait que la substitution d'un bloc d'entrée, préalablement combiné par un OU-Exclusif avec le deuxième nombre aléatoire, correspond au résultat de la combinaison par un OU-Exclusif de ce code d'entrée avec ledit premier nombre aléatoire.

Selon un mode de réalisation de la présente invention, les sous-clés sont masquées avant introduction dans le deuxième registre, par une troisième donnée aléatoire de la taille d'une colonne, également combinée par une fonction de type OU-Exclusif avec ledit bloc appliqué à l'élément de substitution.

Selon un mode de réalisation de la présente invention, une quatrième et cinquième données aléatoires sont combinées par des fonctions de type Ou-Exclusif, respectivement au bloc fourni par l'élément de substitution et au bloc combiné par la troisième donnée aléatoire.

Selon un mode de réalisation de la présente invention, lesdits éléments sont des éléments logiciels au moins partiellement.

Selon un mode de réalisation de la présente invention, lesdits éléments sont des éléments matériels, au moins partiellement.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 et 2 décrites précédemment sont destinées à exposer l'état de la technique et le problème posé ;
la figure 3 représente, de façon très schématique et sous forme de blocs, un mode de réalisation d'un circuit selon l'invention d'exécution des opérations d'une transformation de tour d'un algorithme de type AES ;
la figure 4 représente un détail de l'appel à une table de transformation de tour selon un mode de réalisation de l'invention ; et
la figure 5 illustre, de façon très schématique et sous forme de blocs, un mode de mise en oeuvre de l'invention avec masquage par nombres aléatoires.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les circuits exécutant l'invention n'ont pas été détaillés et font appel à des moyens connus. De même, l'invention sera décrite en faisant référence indifféremment à une terminologie matérielle ou logicielle, sachant que sa mise en oeuvre peut être partiellement ou totalement logicielle.

Une caractéristique de la présente invention est d'organiser le chargement des différents opérandes d'un algorithme AES de façon particulière de façon à permettre un partage des mêmes opérateurs pour plusieurs opérations de l'algorithme. Plus précisément, l'invention prévoit d'effectuer, octet par octet, les étapes de calcul depuis l'opération de substitution d'octets (SUBBYTES) jusqu'à l'opération de mélange de colonnes (MIXCOLUMNS) incluse.

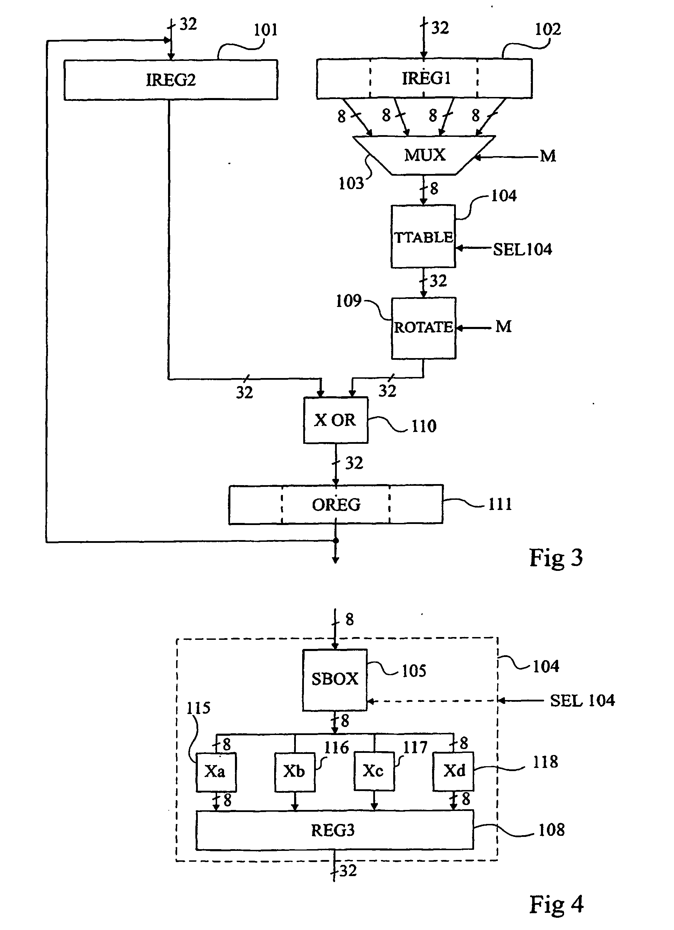

La figure 3 représente, de façon très schématique et sous forme de blocs, un mode de réalisation d'un circuit selon l'invention d'exécution des étapes d'une transformation de tour exploitant un algorithme de type AES.

En se référant à l'exposé des figures 1 et 2 effectué précédemment, la figure 3 représente donc un circuit capable d'exécuter les opérations de décalage de colonnes (SHIFTROWS), de substitution d'octets (SUBBYTES), de mélange de colonnes (MIXCOLUMNS) et d'introduction de la sous-clé de tour (ADDROUNDKEY).

Selon l'invention, les opérations ci-dessus ne sont plus effectuées successivement pour l'ensemble d'une matrice d'octets, mais sont imbriquées d'après un découpage particulier. Cela requiert de coder l'ensemble de la table de transformation de tour (SBOX).

L'invention sera décrite en relation avec un exemple d'application à l'algorithme AES avec des matrices d'états de 128 bits (4 lignes et 4 colonnes d'octets) mais s'applique plus généralement à toute application conforme à un algorithme Rijndael.

Dans la description qui suit, on adoptera les notations suivantes pour désigner les différentes données numériques traitées.

- i désigne le tour de l'algorithme AES (i compris entre 1 et n - généralement, n=10) ;
- $S_i$ désigne la matrice d'états du tour à venir (correspondant à la matrice d'états obtenue en fin de tour de rang i-1) comprenant 4 lignes ou mots de 32 bits constitués chacun de 4 octets désignés $s_i$ (j, l) , avec j compris entre 0 et 3 (rang de la ligne dans la matrice) et 1 compris entre 0 et 3 (rang de la colonne dans la matrice); et
- $K_i$ désigne la matrice de 128 bits constituant la sous-clé à utiliser dans la transformation de tour de rang i, comprenant 16 octets désignés $k_i(j,l)$.

On décrira tout d'abord la structure du circuit de la figure 3 avant d'en expliquer le fonctionnement.

Ce circuit comprend deux registres d'entrée 101 (IREG2) et 102 (IREG1) destinés à être chargés, à chaque tour i de l'algorithme AES par deux mots de 32 bits chacun. Le registre 101 reçoit initialement (au début d'un tour) la première colonne de la sous-clé $K_i$ (octets $k_i$ (0,1) , $k_i$ (1,1) , $k_i$ (2,1) et $k_i$ (3,1)) et le registre 102 reçoit, par ligne de quatre octets $s_i$ (j,0), $s_i$ (j,1), $s_i$ (j,2) et $s_i$(j,3), les données de la matrice d'états $S_i$. Chaque octet du registre 102 est envoyé séparément à une de quatre entrées d'un multiplexeur 103. Le multiplexeur 103 fournit les octets S(j,1) un par un à un bloc 104 de transformation par table (T TABLE). Le bloc 104, caractéristique de l'invention, contient la table de substitution SBOX de l'algorithme AES.

La figure 4 représente le détail du bloc 104 de la figure 3 selon un mode de réalisation préféré de l'invention. Ce bloc 104 est destiné à effectuer successivement, pour chaque octet qui lui est fourni par le multiplexeur 103, une substitution par un autre octet d'après une table de substitution 105 mémorisée (SBOX). Dans le cas du déchiffrement, la table de substitution utilisée est inversée par rapport à la table SBOX et est généralement notée SBOX$^{-1}$. Puis, l'octet fourni par la table 105 est multiplié par une matrice ligne de valeur a, b, c, d, symbolisée par quatre multiplieurs 115 à 118 de façon à obtenir une expansion pondérée de l'octet issu de la table 105 en un mot de 32 bits. Le mot obtenu est placé dans un registre 108 (REG3) en respectant l'ordre de la matrice ligne des coefficients multiplicateurs.

Comme on le verra par la suite, ces multiplications permettent d'exécuter une première étape du mélange de colonnes MIXCOLUMNS de l'algorithme AES pour effectuer la multiplication polynomiale. Le plus souvent, chaque colonne de la matrice issue de l'étape de substitution est multipliée par une matrice carrée dont les valeurs (octets) sont, en hexadécimal et pour le chiffrement : a = 02, d = 03, b = 01 et c = 01 pour la première ligne, b, a, d et c pour la deuxième ligne, c, b, a et d pour la troisième ligne et d, c, b et a pour la quatrième ligne. Pour le déchiffrement, les valeurs hexadécimales sont a = OE, b = 09, c = OD et d = OB .

Le mot issu du registre 108 est soumis à un bloc de rotation 109 (ROTATE) qui effectue une permutation circulaire des octets du mot d'entrée et correspond à une deuxième étape du mélange de colonnes (MIXCOLUMNS) et de décalage de colonnes (SHIFTROWS) de l'algorithme AES. La rotation opérée par le bloc 109 dépend de l'octet sélectionné par le multiplexeur 103. Les blocs 109 et 103 sont donc commandés par un même signal M de valeur 0, 1, 2 ou 3, que ce soit pour le chiffrement ou pour le déchiffrement.

Puis, le mot issu du bloc de rotation est combiné (bloc 110, XOR) par un Ou-Exclusif (addition logique bit à bit) avec le mot provenant du registre 101. Le résultat de cette combinaison est transmis à un registre de sortie 111 (OREG). La sortie du registre 111 est rebouclée sur l'entrée du registre d'entrée 101 afin de permettre de réutiliser un résultat intermédiaire dans la même transformation de tour. Ainsi, le registre 101 contient soit des clés k, soit des données s.

Selon l'invention, les opérateurs illustrés en figure 4 doivent être utilisés seize fois pour chaque transformation de tour. En d'autres termes, en assimilant ces opérateurs à des étapes de traitement, l'invention prévoit une exécution en boucle de ces étapes, seize fois par transformation de tour avec des données différentes dans les registres 101 et 102, et des sélections particulières du multiplexeur 103, des octets de la table 104 (signal de commande SEL104), et des octets auxquels est appliquée l'opération 109.

A chaque nouvelle ligne {$s_i$(j,0), $s_i$(j,1), $s_i$(j,2) et $s_i$(j,3)} d'octets de la matrice $S_i$ chargée dans le registre 102, c'est-à-dire toutes les quatre boucles, le registre 101 est chargé avec une nouvelle colonne de clés {$k_i$(0,1), $k_i$(1,1), $k_i$(2,1) et $k_i$ (3,1)}, avec j=1. Pour toutes les autres boucles, il contient le résultat de la boucle précédente.

Bien entendu, l'ensemble de la matrice $S_i$ et l'ensemble de la matrice $K_i$ sont disponibles en amont des registres 101 et 102. Toutefois, selon l'invention, les matrices $S_i$ et $K_i$ sont chargées colonne par colonne dans les registres respectifs 102 et 101.

Le fonctionnement du circuit des figures 3 et 4 est illustré par le tableau 1 qui décrit, en fonction du rang B de la boucle (B compris entre 1 et 16), les contenus respectifs des différents registres IREG2, IREG1, REG3 et OREG et les états de sorties respectifs O-103, O-105 et O-109 des blocs 103, 105 et 109, au cours d'une transformation de tour, c'est-à-dire des 16 boucles successives. Pour faciliter la lecture du tableau, les conventions suivantes ont été adoptées :

- le rang i de la transformation de tour n'a pas été précisé dans le tableau dans la mesure où il concerne un même tour. De plus, les rangs j et 1 des lignes et colonnes sont indiqués sans parenthèse ; en d'autres termes, $s_i(j,l)$ est écrit "sjl", et $k_i(j,l)$ est écrit "kjl" ;
- le rang de la boucle courante a été désigné "B" ;
- les octets d'un mot sont séparés par des virgules "," ;
- les positions respectives des octets dans les registres contenant des mots de 32 bits correspondent aux positions 0, 1, 2, 3 de gauche à droite ;
- les valeurs respectives 0, 1, 2 et 3 du signal M indiquent une sélection du premier, deuxième, troisième et dernier octet en partant de la gauche dans le registre 102 ;
- un octet est écrit "s'" après substitution d'après la table SBOX 105 ;
- le signe "+" désigne une addition logique (combinaison Ou-Exclusif) bit à bit ; et
- les coefficients multiplicateurs a et d égaux à 02 et 03 ont été respectivement notés 2 et 3, et les coefficients multiplicateurs b et c égaux à 01 ont été omis.

| TABLEAU 1 | | | | | | | | |
|---|---|---|---|---|---|---|---|---|
| B | M | IREG2 | IREG1 | O-103 | O-105 | REG3 | O-109 | OREG |
| 1 | 0 | k00,k10,k20,k30 | s00,s10,s20,s30 | s00 | s'00 | 2s'00,s'00,s'00,3s'00 | 2s'00,s'00,s'00,3s'00 | k00+2s'00,k10+s'00,k20+s'00,k30+3s'00 |
| 2 | 1 | k00+2s'00,k10+s'00,k20+s'00,k30+3s'00 | s01,s11,s21,s31 | s11 | s'11 | 2s'11,s'11,s'11,3s'11 | 3s'11,2s'11,s'11,s'11 | k00+2s'00+3s'11,k10+s'00+2s'11,k20+s'00+s'11,k30+3s'00+s'11 |
| 3 | 2 | k00+2s'00+3s'11,k10+s'00+2s'11,k20+s'00+s'11,k30+3s'00+s'11 | s02,s12,s22,s32 | s22 | s'22 | 2s'22,s'22,s'22,3s'22 | s'22,3s'22,2s'22,s'22 | k00+2s'00+3s'11+s'22,k10+s'00+2s'11+3s'22,k20+s'00+s'11+2s'22,k30+3s'00+s'11+s'22 |
| 4 | 3 | k00+2s'00+3s'11+s'22,k10+s'00+2s'11+3s'22,k20+s'00+s'11+2s'22,k30+3s'00+s'11+s'22 | s03,s13,s23,s33 | s33 | s'33 | 2s'33,s'33,s'33,3s'33 | s'33,s'33,3s'33,2s'33 | k00+2s'00+3s' 11+s' 22+s' 33,k10+s'00+2s'11+3s'22+s'33,k20+s'00+s'11+2s'22+3s'33,k30+3s'00+s'11+s'22+2s'33 |
| 5 | 0 | k01, k11, k21, k31 | s01,s11,s21,s31 | s01 | s'01 | 2s'01,s'01,s'01,3s'01 | 2s'01,s'01,s'01,3s'01 | k01+2s'01,k11+s'01,k21+s'01,k31+3s'01 |
| 6 | 1 | k01+2s'01,k11+s'01,k21+s'01,k31+3s'01 | s02,s12,s22,s32 | s12 | s'12 | 2s'12,s'12,s'12,3s'12 | 3s'12,2s'12,s'12,s'12 | k01+2s'01+3s'12,k11+s'01+2s'12,k21+s'01+s'12,k31+3s'01+s'12 |
| 7 | 2 | k01+2s'01+3s'12,k11+s'01+2s'12,k21+s'01+s'12,k31+3s'01+s'12 | s03,s13,s23,s33 | s23 | s'23 | 2s'23,s'23,s'23,3s'23 | s'23,3s'23,2s'23,s'23 | k01+2s'01+3s'12+s'23,k11+s'01+2s'12+3s'23,k21+s'01+s'12+2s'23,k31+3s'01+s'12+s'23 |
| 8 | 3 | k01+2s'01+3s'12+s'23,k11+s'01+2s'12+3s'23,k21+s'01+s'12+2s'23,k31+3s'01+s'12+s'23 | s00,s10,s20,s30 | s30 | s'30 | 2s'30,s'30,s'30,3s'30 | S'30,s'30,3s'30,2s'30 | k01+2s'01+3s'12+s'23+s'30,k11+s'01+2s'12+3s'23+s'30,k21+s'01+s'12+2s'23+3s'30,k31+3s'01+s'12+s'23+2s'30 |

(suite)

| | | TABLEAU 1 | | | | | | |
|---|---|---|---|---|---|---|---|---|
| B | M | IREG2 | IREG1 | O-103 | O-105 | REG3 | O-109 | OREG |
| 9 | 0 | k02, k12, k22, k32 | s02,s12,s22,s32 | s02 | s'02 | 2s'02,s'02,s'02,3s'02 | 2s'02,s'02,s'02,3s'02 | k02+2s'02,k12+s'02,k22+s'02,k32+3s'02 |
| 10 | 1 | k02+2s'02,k12+s'02,k22+s'02,k32+3s'02 | s03,s13,s23,s33 | s13 | s'13 | 2s'13, s'13, s'13,3s'13 | 3s'13, 2s'13,s'13, s'13 | k02+2s'02+3s'13,k12+s'02+2s'13, k22+s'02+s'13,k32+3s'02+s'13 |
| 11 | 2 | k02+2s'02+3s'13, k12+s'02+2s'13, k22+s'02+s'13, k32+3s'02+s'13 | s00,s20,s20,s30 | s20 | s'20 | 2s'20,s'20,s'20,3s'20 | S'20,3s'20,2s'20,s'20 | k02+2s'02+3s'13+s'20, k12+s'02+2s'13+3s'20, k22+s'02+s'13+2s'20, k32+3s'02+s'13+s'20 |
| 12 | 3 | k02+2s'02+3s'13+s'20, k12+s'02+2s'13+3s'20, k22+s'02+s'13+2s'20, k32+3s'02+s'13+s'20 | s01,s11,s21,s31 | s31 | s'31 | 2s'31,s'31,s'31,3s'31 | s'31,s'31,3s'31,2s'31 | k02+2s'02+3s'13+s'20+s'31, k12+s'02+2s'13+3s'20+s'31, k22+s'02+s'13+2s'20+3s'31, k32+3s'02+s'13+s'20+2s'31 |
| 13 | 0 | k03, k13, k23, k33 | s03,s13,s23,s33 | s03 | s'03 | 2s'03,s'03,s'03,3s'03 | 2s'03,s'03,s'03,3s'03 | k03+2s'03,k13+s'03,k23+s'03,k33+3s'03 |
| 14 | 1 | k03+2s'03,k13+s'03,k23+s'03,k33+3s'03 | s00,s10,s20,s30 | s10 | s'10 | 2s'10,s'10,s'10,3s'10 | 3s'10,2s'10,s'10,s'10 | k03+2s'03+3s'10,k13+s'03+2s'10,k23+s'03+s'10,k33+3s'03+s'10 |
| 15 | 2 | k03+2s'03+3s'10, k13+s'03+2s'10, k23+s'03+s'10, k33+3s'03+s'10 | s01,s11,s21,s31 | s21 | s'21 | 2s'21,s'21,s'21,3s'21 | s'21,3s'21,2s'21,s'21 | k03+2s'03+3s'10+s'21, k13+s'03+Zs'10+3s'21, k23+s'03+s'10+2s'21, k33+3s'03+s'10+s'21 |
| 16 | 3 | k03+2s'03+3s'10+s'21, k13+s'03+2s'10+3s'21, k23+s'03+s'10+2s'21, k33+3s'03+s'10+s'21 | s02,s12,s22,s32 | s32 | s'32 | 2s'32,s'32,s'32,3s'32 | s'32,s'32,3s'32,2s'32 | k03+2s'03+3s'10+s'21+s'32, k13+s'03+2s'10+3s'21+s'32, k23+s'03+s'10+2s'21+3s'32, k33+3s'03+s'10+s'21+2s'32 |

Les 16 octets de la matrice de sortie sont obtenus par lecture du registre de sortie 111 en fin des boucles 4, 8, 12 et 16. Le contenu du registre constitue à chaque fois une colonne de la matrice d'états de sortie. On voit bien que cette matrice respecte l'algorithme AES.

On notera qu'au dernier tour de chiffrement le circuit est commandé pour ne pas effectuer les étapes de l'opération de mélange de colonnes (MIXCOLUMNS). Ainsi, les multiplieurs 115 et 118 ainsi que le bloc de rotation 109 sont commandés pour être désactivés au dernier tour de chiffrement.

Un avantage de la présente invention est que le découpage particulier des opérations minimise la taille requise pour stocker la table de substitution (SBOX) par rapport au précalcul de quatre tables.

La mise en oeuvre d'un tour de chiffrement requiert, par exemple, quatre instructions de chargement de mots de sous-clés dans le registre 101 et seize appels aux instructions requises par les quatre étapes (SHIFTROWS, SUBBYTES, MIXCOLUMNS et ADDROUNDKEY) de l'algorithme AES. En variante, le nombre de cycles peut être réduit en augmentant le nombre de cellules de traitement.

La structure de calcul décrite ci-dessus peut bien entendu être complétée pour être capable d'effectuer le déchiffrement. L'adaptation du circuit et de ses commandes au déchiffrement est à la portée de l'homme du métier à partir des indications données ci-dessus.

Selon une mise en oeuvre préférée de l'invention, l'exécution de l'algorithme est protégée contre d'éventuelles attaques par analyse de consommation (DPA), en masquant cette exécution au moyen de nombres aléatoires.

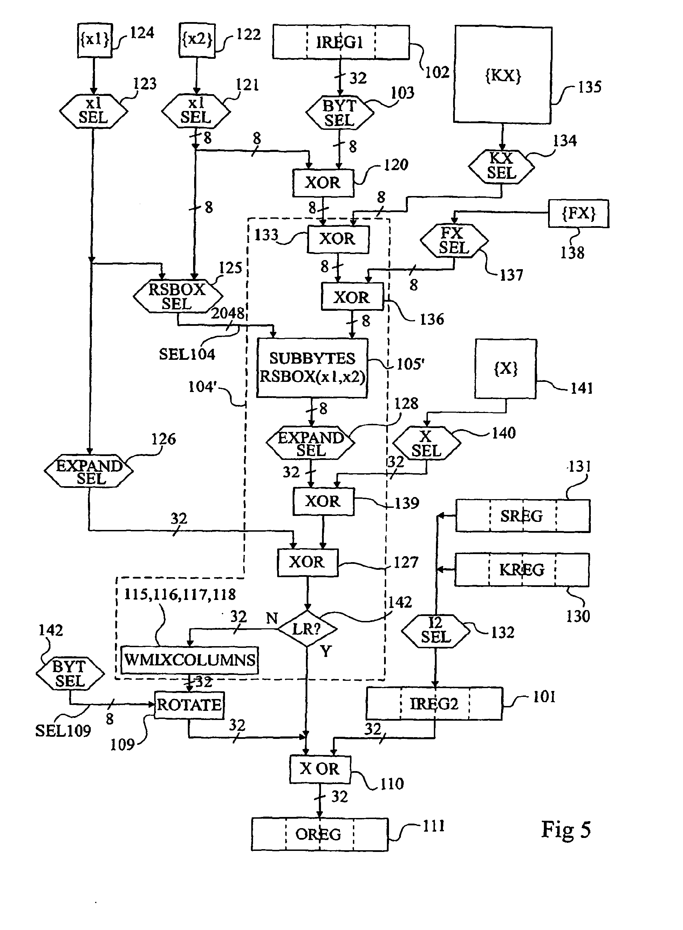

La figure 5 représente, sous forme d'organigramme, un tel mode de réalisation de la présente invention. Cette figure reprend les éléments des figures 3 et 4 et y incorpore des étapes liées au masquage par nombres aléatoires. La description qui suit s'apparente plus à un organigramme de procédé qu'à une structure de processeur. Toutefois, comme pour l'exposé des figures 2 et 3, une étape ou opération et l'élément matériel exécutant cette opération dans le cas d'une machine d'états, ont été désignés par les mêmes références et sont volontairement confondus.

Un premier type de masquage concerne deux premières données aléatoires x1 et x2 de la taille d'un octet sélectionnées dans des ensembles {x1} et {x2} d'octets (par exemple, des matrices de j*l octets). Ce premier type de masquage sert essentiellement à masquer la table de substitution SBOX. Un deuxième type de masquage concerne des données aléatoires de la taille d'un mot de quatre octets sélectionnées dans des ensembles {X}, {KX} et {FX} d'octets (par exemple, des matrices de j*l octets). Comme on le verra par la suite, des données FX et KX sont exploitées par octets et des données X sont exploitées par mots pour être conformes à la taille des données manipulées. Ce deuxième type de masquage sert essentiellement à préserver le masquage des sous-clés.

Le premier type de masquage consiste à introduire des quantités aléatoires (octets) entre les étapes 103 et 104 (figure 3), dans la table de substitution SBOX (étape 105, figure 4), puis à démasquer les résultats en sortie de l'étape 105. Ainsi, on prévoit une combinaison de type XOR (bloc 120), après la sélection d'octet opérée par le multiplexeur 103 (BYTE SEL), avec un octet aléatoire x2 issu d'un sélecteur 121. Le sélecteur 121 sélectionne un octet x2 dans une matrice 122 ({x2}) de 16 octets x2. Par ailleurs, la table de substitution, notée RSBOX, transmise au bloc 105 tient compte non seulement de cet octet x2, mais également préférentiellement d'un octet aléatoire x1 sélectionné par un sélecteur 123 dans une matrice 124 ({x1}) de 16 octets. La table RSBOX est soit calculée à chaque octet traité, soit sélectionnée dans une mémoire contenant des tables précalculées. La table RSBOX est sélectionnée (bloc 125, RSBOX SEL) en fonction des valeurs x1 et x2 courantes. En théorie, il y a 16 possibilités de masquage par tour, soit en tout (dans l'exemple de clés de 128 bits, donc 10 tours) 160 triplets (x1, x2, RSBOX). De préférence, pour réduire la place de stockage nécessaire, les quantités x1 et x2, donc la table RSBOX, restent identiques pour chaque chiffrement (ou déchiffrement), c'est-à-dire pour tous les tours de l'algorithme. En variante, les quantités x1 et x2 sont changées à chaque tour (un triplet (x1, x2, RSBOX) par tour). Dans un mode de réalisation simplifié, tous les octets x1 de la matrice {x1} sont identiques et tous les octets de la matrice {x2} sont identiques. Dans ce cas, la table RSBOX est calculée une seule fois pour tout le chiffrement.

La table de substitution RSBOX, fonction des aléas x1 et x2, est calculée en respectant la relation suivante :

RSBOX(Si+x2)=SBOX(Si)+x1, où SBOX représente la table de substitution de l'algorithme que l'on souhaite masquer et RSBOX désigne la fonction de substitution d'octets (SUBBYTES) adaptée aux données masquées par les quantités x1 et x2. En d'autres termes, on calcule une nouvelle table de substitution RSBOX à partir de la table BOX de l'algorithme que l'on souhaite masquer par les valeurs x1 et x2. Pour le calcul de la table RSBOX, on pourra se référer à la demande de brevet européen N° 1 379 023 de la demanderesse.

Pour la manipulation des données X, FX et RX, le bloc 104' effectuant l'opération de substitution comprend également, par rapport au mode de réalisation des figures 3 et 4, les éléments additionnels suivantes :

- une fonction Ou-Exclusif (bloc 133, XOR) combinant l'octet de sortie du bloc 120 avec un octet KX sélectionné par un sélecteur 134 (KX SEL) dans une matrice 135 ({Kx}) ;
- une fonction Ou-Exclusif (bloc 136, XOR) combinant l'octet de sortie du bloc 133 avec un octet FX, sélectionné par un sélecteur 137 (FX SEL) dans une matrice 138 ({FX}), la sortie de la fonction 136 constituant une première entrée du bloc 105' tandis que les 2048 bits de la table RSBOX issus du bloc 125 en constitue l'entrée de sélection SEL 104 ; et

- une fonction Ou-Exclusif (bloc 139, XOR) combinant le mot de 32 bits issu du bloc d'expansion 128 avec un mot de 32 bits X, sélectionné par un sélecteur 140 (X SEL) dans une matrice 142 ({X}).

Le rôle du mot X est d'éviter que la recombinaison due à l'étape de mélange de colonnes qui suit annule le masquage par la quantité x1. Le mot X est donc utilisé pour masquer les colonnes. Par conséquent, le mot X a la taille (32 bits) des données manipulées par l'étape de mélange de colonnes et la matrice {X} contient un nombre de mots X égal à 4n (rappelons que n désigne ici le nombre de tours de l'algorithme AES, généralement 10). Le mot X est une quantité aléatoire et un même ensemble de quatre mots X utilisés pour les quatre premières boucles d'un tour reste inchangé pour la suite du tour. En d'autres termes, les quatre mots X utilisés dans un tour peuvent être repérés par le code M (compris entre 0 et 3) correspondant au signal de sélection de l'octet dans le registre 102.

La sélection du mot X (bloc 140) est effectuée en fonction du tour de chiffrement (index i), de l'octet concerné par la boucle (index M). En supposant une matrice {X} contenant des mots différents pour chaque tour de chiffrement, un mot $X_{i,M}$ est identifié par les index i et M. Le mot X est modifié au plus une fois par tour et, au dernier tour de chiffrement, aucun mot X n'est sélectionné. Cela signifie que la sortie du bloc 128 traverse le bloc 139 sans modification.

Le rôle de l'octet FX est d'annuler la dérive due à l'introduction des mots $X_M$. Pour simplifier, on suppose que les quatre octets d'un même mot $X_M$ sont identiques et on ne tient pas compte de l'index i de tour. Alors, la matrice {FX} est un vecteur de quatre octets $FX_1$ (rappelons que 1, compris entre 0 et 3, désigne la colonne de l'octet en cours dans la matrice d'états), dont les valeurs respectives sont :

$$FX_0 = aX_0 + dX_1 + cX_2 + bX_3 ;$$

$$FX_1 = bX_0 + aX_1 + dX_2 + cX_3 ;$$

$$FX_2 = cX_0 + bX_1 + aX_2 + dX_3 ;$$

et

$$FX_3 = dX_0 + cX_1 + bX_2 + aX_3.$$

Les valeurs a, b, c et d correspondent aux coefficients de la multiplication polynomiale du mélange de colonnes et "+" désigne toujours une addition logique (XOR) bit à bit. Ainsi, en reprenant l'exemple des figures 3 et 4 et du tableau 1, a = 02, b = 01, c = 01 et d = 03 pour le chiffrement (pour le déchiffrement : a = 0E, b = 09, c = 0D et d = 0B). Bien entendu, les octets d'un même mot $X_M$ peuvent être différents. Dans ce cas, il faut tenir compte de la colonne de l'octet dans les relations ci-dessus.

La sélection de l'octet FX (bloc 137) est effectuée en fonction du tour de chiffrement (index i) et de l'octet concerné par la boucle (index M). En supposant une matrice {FX} contenant des octets FX différents pour chaque tour de chiffrement, un octet FX est identifié par les deux index i et M. Au premier tour de chiffrement, aucun octet FX n'est sélectionné. Cela signifie que la sortie du bloc 133 est directement traitée par le bloc 105'.

Le rôle de l'octet KX est de préserver le masquage des octets de la sous-clé pendant leur utilisation par l'algorithme. La taille de la matrice {KX} correspond à la taille de la matrice d'états $S_i$, donc à la taille de la sous-clé $K_i$. La matrice KX peut changer à chaque sous-clé (chaque tour) ou être la même pour tout le chiffrement (déchiffrement).

La sélection de l'octet KX (bloc 134) est effectuée en fonction du tour de chiffrement (index i), de l'octet concerné par la boucle (index M) et du rang de la boucle (index B), et dépend de la taille de la matrice d'états (ici, 128 bits). En supposant une matrice {KX} contenant des octets KX différents pour chaque tour de chiffrement, un octet KX est identifié par trois index i, r et M, avec r = (B+(B/4)) modulo 4.

Enfin, la valeur x1 subit une expansion (bloc 126, EXPAND SEL) pour obtenir un mot de 32 bits dans lequel chaque octet est égal à x1. Le mot obtenu est utilisé pour démasquer la donnée résultant de la substitution. Ce mot est combiné par une fonction Ou-Exclusif (bloc 127, XOR) avec le résultat de la substitution d'octets. Côté bloc 104, l'octet de sortie de la table 105' subit une expansion (bloc 128, EXPAND SEL) pour obtenir un mot de 32 bits dans lequel l'octet de sortie de la table est reproduit quatre fois à l'identique.

L'expansion, par reproduction de l'octet d'entrée à l'identique dans le mot résultant, prévue aux blocs 126 et 128, n'intervient pas au dernier tour de chiffrement. Lors du dernier tour, l'octet d'entrée est reproduit dans l'octet du mot de sortie correspondant à la position de l'octet en cours de traitement dans la boucle (position M) et les autres octets sont positionnés à 0.

En sortie du bloc 127, on vérifie s'il s'agit du dernier tour de chiffrement (bloc 140 - LR?). Dans l'affirmative (Y), les étapes 115 à 118 (WMIXCOLUMNS) et 109 ne sont pas exécutées et le résultat du bloc 127 est directement combiné par le bloc 110 avec le contenu du registre 101. Dans la négative (N), les deux phases (symbolisées par les blocs WMIXCOLUMNS et ROTATE) du mélange de colonnes sont exécutées avant la combinaison dans le bloc 110. Le signal de commande du bloc 109 qui, comme cela ressort du tableau 1, correspond en fait au signal de sélection de l'octet à traiter dans la boucle a été représenté schématiquement comme provenant d'un bloc de sélection d'octet (bloc 142 - BYTE SEL).

En partie droite de la figure 5, on a détaillé des éléments indépendants du masquage mais utiles pour effectuer les transformations au moyen d'un même processeur (logiciel ou matériel), y compris dans le mode de réalisation des figures 3 et 4. Cela correspond à la sélection des octets à charger dans le registre 101. Le registre 101 est représenté alimenté soit par un registre 130 de clés (KREG), soit par un registre intermédiaire 131 (SREG) dans lequel a été recopié le contenu du registre 111 à la fin de la boucle précédente. Un sélecteur 132 (12 SEL) permet de choisir l'un ou l'autre des registres 130 et 131 pour transfert dans le registre 101.

Bien que cela n'ait pas été représenté, les sous-clés fournies par le registre 130 sont masquées par les données aléatoires KX avant introduction dans ce registre. Ainsi, les octets des sous-clés ne sont jamais utilisés démasqués dans l'algorithme.

Bien entendu, la présente invention est susceptible de diverses variantes et modifications qui apparaîtront à l'homme de l'art. En particulier, bien que l'invention ait été décrite en relation avec un exemple d'application à des matrices d'états de 128 bits, elle s'applique plus généralement à tout algorithme Rijndael et les adaptations requises sont à la portée de l'homme du métier à partir des indications fonctionnelles données ci-dessus.

De plus, l'adaptation de l'invention au déchiffrement est à la portée de l'homme du métier à partir des indications données pour le chiffrement.

Enfin, la mise en oeuvre pratique de l'invention et notamment la production de signaux de commande adaptés et la synchronisation des étapes est à la portée de l'homme du métier.

**Revendications**

1. Processeur d'exécution d'un algorithme de type Rijndael, effectuant plusieurs tours (i) de chiffrement ou déchiffrement d'une matrice initiale ($S_0$) composée de blocs de données ($s_0(j,l)$) de taille identique pour obtenir une matrice résultante ($S_n$) de même taille, chaque tour impliquant une matrice ($K_i$) de blocs de clés de chiffrement ou déchiffrement ($k_i(j,l)$) de même taille que les blocs de données, et une table de substitution (SBOX) des blocs de données, **caractérisé en ce qu'**il comporte :

   un premier registre d'entrée (102) pour contenir une colonne de blocs de données ($s_i(j,l)$) d'entrée de tour ;
   un registre de sortie (111) pour contenir une colonne de blocs de données transformées ($s_{i+1}(j,l)$) de sortie de tour ou une colonne de blocs de données intermédiaires ;
   un deuxième registre d'entrée (101) pour contenir soit une colonne de blocs de clés, soit les blocs de données intermédiaires du registre de sortie ;
   un élément (104) de substitution de blocs d'après une table (105, 105') de substitution chargée dans une mémoire, ledit élément de substitution recevant les données bloc par bloc après sélection (103) dans le premier registre et fournissant, pour chaque bloc, une colonne de blocs ;
   un élément (109) commandable de permutation circulaire des blocs de la colonne du circuit de substitution (104) ; et
   un élément (110) de combinaison bit à bit de type OU-Exclusif de la colonne de blocs fournie par le circuit de permutation avec le contenu du deuxième registre, le résultat de la combinaison étant chargé dans le registre de sortie.

2. Processeur selon la revendication 1, dans lequel le deuxième registre reçoit une colonne de blocs de clés à chaque chargement d'une nouvelle colonne de blocs de données dans le premier registre, et une colonne de blocs de données intermédiaires sinon.

3. Processeur selon la revendication 2, dans lequel les opérations effectuées par lesdits éléments sont effectuées, à chaque tour, autant de fois qu'il y a de blocs dans la matrice d'états.

4. Processeur selon l'une quelconque des revendications 1 à 3, dans lequel ledit élément de substitution (104, 104') comprend :

un premier élément (105, 105') de substitution bloc à bloc d'après ladite table ;
un deuxième élément (128) d'expansion d'un bloc fourni par ledit premier élément en une colonne de blocs ; et
une série d'éléments multiplicateurs (115, 116, 117, 118), bloc par bloc, de la colonne fournie par ledit deuxième élément.

5. Processeur selon la revendication 4, dans lequel ladite série d'éléments multiplicateurs (115, 116, 117, 118) et ledit élément de permutation circulaire sont désactivés au dernier tour de chiffrement ou de déchiffrement.

6. Processeur selon l'une quelconque des revendications 1 à 5, comprenant en outre des moyens pour masquer l'exécution des transformations de tour par au moins une quantité aléatoire.

7. Processeur selon la revendication 6, comprenant des éléments de masquage pour combiner par une fonction de type OU-Exclusif (120) le bloc appliqué à l'élément de substitution (104') par au moins un premier nombre (x1) ayant la taille dudit bloc.

8. Processeur selon la revendication 7, dans lequel ledit élément de substitution utilise une table (RSBOX) calculée avec un deuxième nombre aléatoire (x2) de même longueur que le premier nombre (x1), ladite table respectant le fait que la substitution d'un bloc d'entrée, préalablement combiné par un OU-Exclusif avec le deuxième nombre aléatoire, correspond au résultat de la combinaison par un OU-Exclusif de ce code d'entrée avec ledit premier nombre aléatoire.

9. Processeur selon l'une quelconque des revendications 6 à 8, dans lequel les sous-clés sont masquées avant introduction dans la deuxième registre, par une troisième donnée aléatoire (KX) de la taille d'une colonne, également combinée par une fonction de type OU-Exclusif (133) avec ledit bloc appliqué à l'élément de substitution (104') .

10. Processeur selon la revendication 9, dans lequel une quatrième (X) et cinquième (FX) données aléatoires sont combinées par des fonctions de type Ou-Exclusif, respectivement au bloc fourni par l'élément de substitution et au bloc combiné par la troisième donnée aléatoire.

11. Processeur selon l'une quelconque des revendications précédentes 1 à 10, dans lequel lesdits éléments sont des éléments logiciels, au moins partiellement.

12. Processeur selon l'une quelconque des revendications 1 à 10, dans lequel lesdits éléments sont des éléments matériels, au moins partiellement.

**Claims**

1. A processor for executing a Rijndael-type algorithm, performing several rounds (i) of ciphering or deciphering of an initial matrix ($S_0$) formed of data blocks ($s_0(j,1)$) of identical size to obtain a resulting matrix ($S_n$) of same size, each round implying a matrix ($K_i$) of blocks of ciphering or deciphering keys ($k_i(j,l)$) of same size as the data blocks, and a data block substitution box (SBOX), **characterized in that** it comprises:

a first input register (102) to contain a column of round input data blocks ($s_i(j,l)$);
an output register (111) to contain a column of transformed round output data blocks ($s_{i+1}(j,l)$) or an intermediary data block column;
a second input register (101) to contain either a key block column, or the intermediary data blocks of the output register;
an element (104) of block substitution based on a substitution box (105, 105') loaded into a memory, said substitution element receiving the data block by block after selection (103) from the first register and providing, for each block, a block column;
a controllable element (109) of circular permutation of the blocks of the substitution circuit column (104); and
an element (110) of XOR-type bit-to-bit combination of the block column provided by the permutation circuit with the content of the second register, the result of the combination being loaded into the output register.

2. The processor of claim 1, in which the second register receives a column of blocks of keys on each loading of a new data block column into the first register, and an intermediary data block column otherwise.

3. The processor of claim 2, in which the operations performed by said elements are performed, at each round, as many times as there are blocks in the state matrix.

4. The processor of any of claims 1 to 3, in which said substitution element (104, 104') comprises:

a first element (105, 105') of block-by-block substitution based on said table;
a second element (128) of expansion of a block provided by said first element into a block column; and
a series of elements (115, 116, 117, 118) of multiplication, block-by-block, of the column provided by said second element.

5. The processor of claim 4, in which said series of multiplication elements (115, 116, 117, 118) and said circular permutation element are deactivated at the last ciphering or deciphering round.

6. The processor of any of claims 1 to 5, further comprising means for masking the execution of the round transformations with at least one random quantity.

7. The processor of claim 6, comprising masking elements for combining by an XOR-type function (120) the block applied to the substitution element (104') with at least one first number (x1) having the size of said block.

8. The processor of claim 7, in which said substitution element uses a table (RSBOX) calculated with a second random number (x2) of same length as the first number (x1), said table respecting the fact that the substitution of an input block, previously combined by XOR with the second random number, corresponds to the result of the combination by XOR of this input code with said first random number.

9. The processor of any of claims 6 to 8, in which the sub-keys are masked before introduction into the second register, by third random data (KX) of the size of a column, also combined with an XOR-type function (133) with said block applied to the substitution element (104').

10. The processor of claim 9, in which fourth (X) and fifth (FX) random data are combined by XOR-type functions, respectively with the block provided by the substitution element and with the block combined by the third random data.

11. The processor of any of the foregoing claims 1 to 10, in which said elements are at least partially software elements.

12. The processor of any of claims 1 to 10, in which said elements are at least partially hardware elements.

**Patentansprüche**

1. Ein Prozessor zum Durchführen eines Rijndael-Typ Algorithmus, der mehrere Zyklen (i) des Verschlüsselns oder Entschlüsselns einer Anfangsmatrix ($S_0$) ausführt, die von Datenblöcken ($s_0(j, l)$) identischer Größe gebildet wird, um eine Ergebnismatrix ($S_n$) von gleicher Größe zu erhalten, wobei jeder Zyklus eine Matrix ($K_i$) von Blöcken von Verschlüsselungs- oder Entschlüsselungs Schlüsseln ($k_i(j,l)$) von gleicher Größe wie die Datenblöcke beinhaltet und eine Datenblock Substitutions-Box (SBOX), **dadurch gekennzeichnet dass** er folgendes aufweist:

ein erstes Eingaberegister (102) zum Aufnehmen einer Spalte von Durchlauf Eingabe-Datenblöcken ($s_i(j,l)$);
ein Ausgaberegister (111) zum Aufnehmen von Spalten von transformierten Zyklus Ausgabe-Datenblöcken ($S_{i+1}(j,l)$) oder einer intermediären Datenblock-Spalte;
ein zweites Eingaberegister (101) zum Aufnehmen entweder einer Schlüsselblock-Spalte oder der intermediären Datenblöcke des Ausgaberegisters;
ein Element (104) einer Block Substitution, basierend auf einer Substitutions-Box (105, 105'), welches in einen Speicher geladen ist, wobei das Substitutionselement die Daten Block-für-Block nach der Auswahl (103) aus dem ersten Register empfängt und für jeden Block eine Blockspalte bereitstellt;
ein steuerbares Element (109) zyklischer Permutationen der Blöcke der Substitutionszyklus-Spalte (104); und
ein Element (110) einer XOR-Typ Bit-zu-Bit Kombination der Block Spalte, die durch den Permutationszyklus mit dem Inhalt des zweiten Registers bereitgestellt wird, wobei das Ergebnis der Kombination in das Ausgaberegister geladen wird.

2. Prozessor nach Anspruch 1, in welchem das zweite Register eine Spalte von Blöcken von Schlüsseln empfängt bei jedem Laden eines neuen Datenblocks in das erste Register und einer intermediären Datenblock-Spalte andernfalls.

3. Prozessor nach Anspruch 2, in welchem die Operationen, die durch diese Elemente ausgeführt werden, in jedem Zyklus so oft ausgeführt werden, wie Blöcke in der Zustandsmatrix vorhanden sind.

4. Prozessor nach einem der Ansprüche 1 bis 3, in welchem das Substitutionselement (104, 104') folgendes aufweist:

ein erstes Element (105, 105') einer Block-für-Block Substitution basierend auf der Tabelle;
ein zweites Element (128) einer Entwicklung eines Blocks, bereitgestellt durch das erste Element, in eine Block-Spalte; und
eine Serie von Elementen (115, 116, 117, 118) einer Block-für-Block Multiplikation der Spalte, bereitgestellt durch das zweite Element.

5. Prozessor nach Anspruch 4, in welchem die Serie von Multiplikationselementen (115, 116, 117, 118) und das zyklische Permutationselement in dem letzten Verschlüsselungs- oder Entschlüsselungszyklus deaktiviert sind.

6. Prozessor nach einem der Ansprüche 1 bis 5, der ferner Mittel aufweist zum Maskieren der Durchführung der Zyklus-Transformationen mit wenigstens einer zufälligen Größe.

7. Prozessor nach Anspruch 6, der Maskierelemente aufweist zum Kombinieren des Blocks, angewandt auf das Substitutionselement (104'), durch eine XOR-Typ Funktion (120) mit wenigstens einer ersten Zahl (x1), die die Größe des Blocks aufweist.

8. Prozessor nach Anspruch 7, in welchem das Substitutionselement eine Tabelle (RSBOX) benutzt, die mit einer zweiten Zufallszahl (x2) von gleicher Länge wie die erste Zahl (x1) berechnet ist, wobei die Tabelle die Tatsache berücksichtigt, dass die Substitution eines Eingabeblocks, der vorher durch XOR mit der zweiten Zufallszahl kombiniert wurde, dem Ergebnis der Kombination durch XOR des Eingabecodes mit der ersten Zufallszahl entspricht.

9. Prozessor nach einem der Ansprüche 6 bis 8, in welchem die Unterschlüssel vor der Einführung in das zweite Register durch dritte Zufallsdaten (KX) von der Größe einer Spalte maskiert sind, die ebenfalls mit einer XOR-Typ Funktion (133) mit dem Block, angewandt auf das Substitutionselement (104'), kombiniert sind.

10. Prozessor nach Anspruch 9, in welchem vierte (X) und fünfte (FX) Zufallsdaten über XOR-Typ Funktionen kombiniert sind, beziehungsweise mit dem Block, bereitgestellt durch das Substitutionselement, und mit dem Block, kombiniert durch die dritten Zufallsdaten.

11. Prozessor nach einem der Ansprüche 1 bis 10, in welchem die Elemente wenigstens teilweise Software Elemente sind.

12. Prozessor nach einem der Ansprüche 1 bis 10, in welchem die Elemente wenigstens teilweise Hardware Elemente sind.

Fig 1

201

202

203

204

20

20'

SBOX

20"

* P[X]
modM[X]

⊕Ki | ⊕Ki | ⊕Ki | ⊕Ki
⊕Ki | ⊕Ki | ⊕Ki | ⊕Ki
⊕Ki | ⊕Ki | ⊕Ki | ⊕Ki
⊕Ki | ⊕Ki | ⊕Ki | ⊕Ki

20""

SHIFTROWS

3

SUBBYTES

4

41

INV

42

AFFINE

MIXCOLUMNS

5

ADDROUNDKEY

6

Fig 2

Fig 3

Fig 4

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030133568 A
- US 20030068036 A
- US 20030099352 A
- EP 1379023 A

**Littérature non-brevet citée dans la description**

- **Joan Daemen ; Vincent Rijmen.** The Design of Rijndael. Springer-Verlag
- Differential Power Analysis. **Paul Kocher ; Joshua Jaffe ; Benjamin Jun.** conférence CRYPTO. Springer-Verlag LNCS 1666, 1999, vol. 99, 388-397